# EUROPEAN PATENT APPLICATION

(11) **EP 4 501 556 A1**
(43) Date of publication of application: **05.02.2025**
(21) Application number: 23189511.1
(22) Date of filing: 03.08.2023
(51) Int. Cl.: B25J 15/00, B25J 15/02, B25J 15/08

(54) **DEVICE FOR APPLYING FORCE TO AN OBJECT FOR POSITIONING AND/OR FIXATION OF THE OBJECT, GRIPPER, ROBOT AND METHOD FOR HANDLING AT LEAST ONE OBJECT**

(71) Applicant: ETH Zurich, 8092 Zürich (CH)
(72) Inventor: Steger, Ulrich, 1220 Wien (AT); Weirich, Stefan, 8952 Schlieren (CH); Cangan, Barnabas Gavin, 8051 Zürich (CH); Katzschmann, Robert, 8044 Zürich (CH)
(74) Representative: Schulz Junghans Patentanwälte PartGmbB

(57) **Abstract**

The invention relates to a device (100) for applying force to an object for positioning and/or fixation of the object, comprising a first member (10) and a second member (20) hingedly connected to the first member (10), wherein the first member (10) has a curved guide surface (11) for forming a hinge connecting the members (10, 20), which curved guide surface (11) is formed for guiding the second member (20) on this curved guide surface (11), wherein the first member (10) comprises a longitudinal axis (L1) that extends in the same plane as a tangent (T1) on the guide surface (11) of the first member (10), the tangent (T1) being at an acute angle to the longitudinal axis (L1) and the curved guide surface (11) being curved at least about the longitudinal axis (L1), and wherein the second member (20) comprises a surface (21) with which this second member (20) can roll on the guide surface (11) of the first member (10).

The invention also relates to a gripper, a robot, as well as a method for handling at least one object.

## Description

The present invention relates to a device for applying force to an object for positioning and/or fixation of the object, a gripper comprising at least one device for applying force to an object, a robot comprising at least one device for applying force to an object, as well as a method for handling at least one object.

The use of robotics in various sectors has witnessed significant advancements in recent years. However, there remains a challenge in replicating the dexterity and adaptability of human fingers, particularly the human thumb. Conventional robotic systems often lack the flexibility and range of motion required to perform tasks that humans can effortlessly accomplish. At the same time, robotic systems typically require numerous motors for performing movements that fail to reproduce the dexterity of human fingers.

For example, KR20200098940A discloses a robot finger assembly with a base unit and a finger joint unit that includes a plurality of joint members connected to the base unit. Contact surfaces of adjacent joint members are formed essentially cylindrically, so as to allow for a pivoting between adjacent joint members with one rotational degree of freedom. Pairs of rolling drive wires connecting pairs of adjacent joint members are provided for realizing pivot movements between the adjacent joint members, corresponding to flexion movements of the robot finger with one rotational degree of freedom per joint. While multiple rotational degrees of freedom of the robot finger can be realized by means of multiple adjacent joint members connected by pairs of rolling drive wires, the resulting dexterity of the robot finger remains limited to a series of joints having each one rotational degree of freedom. At the same time, to realize complex movements with more than one rotational degree of freedom, individual joints between adjacent joint members have to be driven with separate motors, which requires numerous motors.

Based on this, it is subject of the present invention to provide a device for applying force to an object for positioning and/or fixation of the object, a gripper comprising at least one device for applying force to an object, a robot comprising at least one device for applying force to an object, as well as a method for handling at least one object that are improved with respect to the prior art in that they require less motors to realize more complex movements between members of the device.

This task is solved by a device for applying force to an object for positioning and/or fixation of the object with the features of claim 1, a gripper with the features of claim 13, a robot with the features of claim 14 as well as a method for handling at least one object according to claim 15.

Advantageous embodiments of the invention are given in the corresponding dependent claims and described in the following.

A first aspect of the invention relates to a device for applying force to an object for positioning and/or fixation of the object. That is, the device may be adapted to hold an object. The device comprises a first member and a second member hingedly connected to the first member, wherein the first member has a curved guide surface for forming a hinge connecting the members, which curved guide surface is formed for guiding the second member on this curved guide surface. The first member comprises a longitudinal axis that extends in the same plane as a tangent on the guide surface of the first member, the tangent being at an acute angle to the longitudinal axis and the curved guide surface being curved at least about the longitudinal axis. The second member comprises a surface with which this second member can roll on the curved guide surface of the first member.

Since the second member comprises a surface with which the second member can roll on the curved guide surface of the first member, the curved guide surface of the first member can also be referred to as a rolling surface, for guiding the second member in a rolling motion of the second member.

The curved guide surface may have a smooth curve or a cross-section in which several flat surfaces are connected in series to form a polygon, the polygon approximating a curved line at least in an interpolation. The curved guide surface of the first member enables a rotation of the second member about a longitudinal axis of the first member, as the second member rolls on the first member. Moreover, while the second member rolls on the first member, the second member may simultaneously perform a precession with respect to the longitudinal axis of the device, or rotate around a longitudinal axis of the device. As such, the device according to the invention allows for a movement in three spatial coordinates of the second member with respect to the first member, which corresponds to the ability of the human thumb to perform abduction and flexion movements under a rotation of thumb members around a longitudinal axis of the thumb, a so called "screw home torque motion" during the thumb's abduction/adduction movement. As the rotation of the second member around the longitudinal axis of the device is happening simultaneously with the rolling movement of the second member on the first member, no additional motor is needed to cause the advantageous rotation of the second member around the longitudinal axis of the device. The advantageous screw home torque motion thus does not require an additional motor, but can be achieved entirely by the surface geometry of the first member and the second member,

The curved guide surface can be formed by an area of an outside of the first member, wherein the first member is formed at least in portions as a solid body. Accordingly, the curved guide surface of the first member can form a convexity.

As a consequence of the interplay between the curved guide surface of the first member and the surface of the second member, the second member can perform complex three-dimensional movements with respect to the first member, which improves the positioning and/or fixation of objects by means of the device.

According to an embodiment, the second member comprises a longitudinal axis that extends in the same plane as a tangent on the surface of the second member, the tangent being at an acute angle to the longitudinal axis and the surface being curved at least about the longitudinal axis.

In an embodiment, the guide surface of the first member and/or the surface of the second member is formed at least in regions by a cone surface area, an ellipsoid surface area and/or a paraboloid surface area. The ellipsoid comprises the special case of a sphere, wherein the three pairwise perpendicular axes of symmetry defining the ellipsoid have the same length.

In an embodiment, the guide surface of the first member and/or the surface of the second member can be formed by a portion of a truncated cone, a truncated ellipsoid and/or a truncated paraboloid.

The surface of the second member can be formed at least in sections by a portion of a cylinder.

In an embodiment, at least one of the members comprises a plurality of adjacent cone surface areas, ellipsoid surface areas and/or paraboloid surface areas, or a combination thereof. For example, a cone surface area can be adjacent to an ellipsoid surface area. However, for instance, also a plurality of cone surface areas can be adjacent to each other. In this case, preferably, the adjacent cone surface areas can form cone surface areas of cones with different geometries, for example of cones with different bases and/or of different truncated cones. In the present embodiment, in case of the first member, the plurality of adjacent cone surface areas, ellipsoid surface areas and/or paraboloid surface areas can form the curved guide surface of the first member and in case of the second member, the plurality of adjacent cone surface areas, ellipsoid surface areas and/or paraboloid surface areas can form the surface of the second member. The movement of the second member with respect to the first member can be tailored by means of different geometries of the guide surface of the first member and the surface of the second member, which further improves the positioning and/or fixation of objects by means of the device. Adjacent cone surface areas, ellipsoid surface areas and/or paraboloid surface areas based on different geometries give rise to a boundary edge delimiting the adjacent cone surface areas, ellipsoid surface areas and/or paraboloid surface areas from each other. According to the present embodiment, for example both the first member and the second member can each comprise a plurality of cone surface areas, wherein the cone surface areas can be arranged at the periphery of the first member and the second member in such a way that boundary edges between the cone surface areas of a respective member come into contact with each other when the second member rolls on the first member. This means that a first cone surface area on the second member can roll exclusively on a first cone surface area on the first member, and a second cone surface area on the second member can roll exclusively on a second cone surface area on the first member.

In another embodiment, at least one cone surface area is a cone surface area of a cone having an elliptical base, and/or at least one paraboloid surface area is a paraboloid surface area of a paraboloid comprising an elliptical base. The elliptical base comprises the special case in which the elliptical-base comprises a circle, wherein the two perpendicular axes of symmetry defining the elliptical base have the same length.

According to another embodiment, at least one cone surface area is a cone surface area of an inclined cone and/or the at least one paraboloid surface area is a paraboloid surface area of an inclined paraboloid. In an alternative embodiment, the at least one cone surface area is a cone surface area of a straight cone and/or the at least one paraboloid surface area is a paraboloid surface area of a straight cone.

In an embodiment, the curved guide surface of the first member has a first cone surface adjacent to a second cone surface area, an ellipsoid surface area and/or a paraboloid surface area. In case of a convex surface of the second member, such as a cone surface area, an ellipsoid surface area and/or a paraboloid surface area, the second member can roll on one of the cone surface areas of the first member with the surface of the second member, which allows for complex movements of the second member with respect to the first member.

In case the second member also comprises a cone surface area, an ellipsoid surface area and/or a paraboloid surface area, the second member can comprise a a first cone surface area adjacent to a second cone surface area, an ellipsoid surface area and/or a paraboloid surface area.

According to an embodiment, two pairs of traction elements are connected to one of the two members at respective fixing points, wherein the respective fixing points of a respective pair of traction elements are arranged in a plane which is substantially perpendicular to the respective other plane, so that a rotational movement of the member provided with the pairs of traction elements can be realized by antagonistic movement of the traction elements of said pair of traction elements. Both pairs of traction elements can be moved antagonistically, so that a movement of the member connected to the traction elements takes place on a movement path which runs outside of the two planes. If only one pair of traction elements is moved antagonistically, the member connected to the traction elements performs a movement in the respective plane of the pair traction elements that are moved antagonistically. As such, the two pairs of traction elements allow to perform rotational movements of the two members with two rotational degrees of freedom, such that for example a gripper finger equipped with it, has a high degree of flexibility in its application and is correspondingly versatile.

At least one pair of traction elements can be driven by a respective motor for realizing the movement of the traction elements. For the antagonistic movement of the pair of traction elements, the respective motor can be configured to wind one of the traction elements of the pair of traction elements on a first spool associated with the respective pair of traction elements, while the other one of the traction elements of the pair of traction elements is unwound from a second spool associated with the respective pair of traction elements. The motors of both pairs can be synchronized to turn in the same direction in order to perform flexion movements of the member connected to the pair of traction elements. Likewise, the motors of both pairs can be configured to turn in opposite directions in order to perform abduction or adduction movements of the member connected to the pair of traction elements.

According to an embodiment, the device can comprise a first member and for contacting the object a second member, hingedly connected to the first member via a hinge unit having two degrees of rotational freedom, and a tensioning system comprising two pairs of traction elements fixed to the second member. The first pair of traction elements can be mounted to a first spool set and the second pair of traction elements can be mounted to a second spool set. The first traction element of the first pair can be mounted to a first spool of the first spool set, and the second traction element of the first pair can be mounted to a second spool of the first spool set. The first traction element of the second pair can be mounted to a first spool of the second spool set and the second traction element of the second pair can be mounted to a second spool of the second spool set. The two degrees of rotational freedom of the hinge unit exist in two theoretical movement planes being perpendicular to each other, wherein fixing points at the traction elements on the second member can be positioned in connection planes outside the movement planes.

As such, the device can be used to realise a form-fit and/or force-fit on or with the object to be positioned and/or fixated.

The second member can be moved with respect to the first member with two rotational degrees of freedom. The two theoretical movement planes are associated with the two rotational degrees of freedom. The first theoretical movement plane is associated with the first rotational degree of freedom and the second theoretical movement plane is associated with the second rotational degree of freedom.

By rotating the spool sets, the second member can be moved with said two rotational degrees of freedom with respect to the first member. When the first spool set is rotated, the first pair of traction elements can realize movements in the first theoretical movement plane and when the second spool is rotated, the second pair of traction elements can realize movements in the second theoretical movement plane. Both spool sets can be rotated simultaneously, such that the second member performs a movement outside the two theoretical movement planes. By driving the spool sets, the respective traction elements can be wound or unwound from the respective spool, whereby the length between the respective spool and the fixing point of the respective traction element is varied, such that a pivoting of the second member can be realized.

According to an embodiment, the device for applying force to an object comprises a first motor for driving the first spool set and a second motor for driving the second spool set. That is, the first motor drives the first spool and the second spool of the first spool set, and the second motor drives the first spool and the second spool of the second spool set. The respective motor can be configured such that if the respective first traction element of the respective pair of traction elements is wound up the respective first spool, thereby shortening the length of the respective first traction element, the respective second traction element of the respective pair of traction elements is unwound from the respective second spool in an antagonistic fashion, thereby increasing the length of the respective second traction element by the same amount, and vice versa. As such, a pivoting of the second member can be achieved.

At least one pair of traction elements can be associated with an elastic element, for example a torque spring, that rotatably connects the first and the second spool. The elastic element is configured to reduce a slack of the traction elements by keeping the unwound traction element taught with respect to the wound traction element. The elastic element introduces a flexible compliance, such that when the motor associated with the pair of traction elements stops, a further extension of the unwound traction element is impeded, realizing a strong grasp. Conversely, a flexing movement corresponding to a partial winding up of the unwound traction element is possible under external forces counteracting the elastic element, which realizes an impact compliance for impacts on the device.

In other words, the spools of at least one of the spool sets can be mechanically coupled to each other by a torsion spring. The torsion spring can prevent a sagging of the traction elements by keeping the unwound traction element taught with respect to the wound traction element. Additionally, the torsion springs can realize a selective bi-directional compliance of the device, wherein if the respective motor is stopped, the second member cannot be pivoted in one direction in the respective theoretical movement plane, thereby allowing for robust positioning and/or fixation of objects by means of the device, but can be pivoted in the other direction in the respective theoretical movement plane under external forces counteracting the elastic element, such that the second member can yield in the event of an external force acting on the second member.

For example, at least one of the traction elements comprises a modulus of elasticity of less than 230 GPa. At least one of the traction elements can comprise or consist of steel or of another appropriate material as for instance polyethylene or fibre-reinforced plastic.

In an embodiment, the hinge unit comprises two hinges having only one degree of rotational freedom, respectively, wherein the movement planes of these degrees of rotational freedom are essentially perpendicular to each other.

In another embodiment, both hinges are mechanically connected to each other by an intermediate member.

In yet another embodiment, the intermediate member and a respective other member being coupled to the intermediate member in order to form a respective hinge, so that the intermediate member and a respective other member coupled to the intermediate member for forming a hinge each have a guide surface curved around a curvature axis which is angular to the axis of the series arrangement of the members, wherein the curvature axes of the first hinge are essentially perpendicular with respect to the curvature axes of the second hinge.

In another embodiment, the two pairs of traction elements lead extend essentially in parallel to the longitudinal axis of the device.

According to another embodiment, the connection planes are diagonal with respect to the theoretical movement planes. That is, the ends of the two pairs of traction elements are diagonally mounted. Consequently, if a pair of traction elements is driven by the respective motor, the second member pivots not only around two pivot axes associated with the two theoretical movement planes, but at the same time a rotation of the second member around the longitudinal axis of the device, thereby realizing a "screw home torque motion" of the second member, which substantially improves the positioning and/or fixation of objects by means of the device. As such, the device allows for a movement of the second member in three spatial coordinates with respect to the first member, which corresponds to the ability of the human thumb to perform abduction and flexion movements under a rotation of thumb members around a longitudinal axis of the thumb during the thumb's abduction/adduction movement.

In yet another embodiment, a plurality of hinges is arranged in series, wherein at least one of the hinges is formed according to the hinge connection between two members according to the invention. The present embodiment allows to perform the essential functions of a human finger, and accordingly is referred to herein as a "finger". For example, two hinges of the finger arranged in series are formed according to the above-mentioned device for applying force to an object.

In an embodiment, at least one further hinge is provided with only one rotational degree of freedom, said further hinge with one rotational degree of freedom allows movement of a movable member pivotally connected to another member by means of said further hinge is pivotable in just one plane parallel to the longitudinal axis of said movable member. The present embodiment allows for a gripping movement of the movable member, similarly to gripping movement of members of the human finger, such as for example the phalanx proximalis and the phalanx distalis.

The longitudinal axis extends in a direction parallel to the series arrangement of members when the members are arranged in a stretched arrangement.

The further hinge can comprise a pair of traction elements extending in a plane substantially perpendicular to the plane of motion of said further hinge, so that a rotational motion of the member provided with this pair of traction elements may be realized by antagonistic motion of the traction elements of this pair of traction elements.

According to an embodiment, a hinge realizing one rotational degree of freedom has, on the two members coupled to one another by the hinge, respective curved surfaces which run perpendicularly to the plane of movement. For example, the respective curved surfaces are at least in sections formed cylindrically. The curved surfaces are curved around an axis parallel to a pivot axis associated with the hinge.

In another embodiment, guide tension elements crosswise interconnect the members which are coupled to each other by means of a hinge. The guide tension elements advantageously allow for guiding the rolling movement of the surface of the second member on the curved guide surface of the first member. For example, the guide tension elements comprise threads, bands, ligaments and the like. The guide tension elements can cross each other on the curved guide surface of the first member and the surface of the second member in their line of contact and thus on an axis that is parallel to an axis of rotation defining the hinge between the first and the second member.

The guide tension elements can be embedded in the curved guide surface and in the surface of the second member, for example in grooves formed in the first member and/or the second member.

The guide tension elements can be flexible, such that the guide tension elements change their length when the second member is moved with respect to the first member.

In an embodiment, the device for applying force to an object comprises at least one pivot for pivotally connecting members about the longitudinal axis of a member connected to the pivot and comprises a torque spring connecting the two members connected by means of the pivot. The rotation of the member connected to the pivot around its longitudinal axis is advantageously in that the member can for adapt to the shape of an object to be grasped while the member rotates away from a rest position, under biasing of the torque spring. Once no more force is applied to the object by means of the member, the torque spring relaxes under rotation of the member about its longitudinal axis to the rest position. As such, the pivot can form a revolute hinge between members held in a default position by said torque spring and realize a passive mechanism for a rotation of a member around its longitudinal axis by means of said torque spring after applying force to an object, instead of an active mechanism for driving the rotation of a member around its longitudinal axis by means of said traction elements.

For example, the pivot connects said first and said second member and/or such a pivot connects said movable member with another member.

A second aspect of the invention relates to a gripper, comprising at least one device for applying force to an object according to the first aspect of the invention. As such, the embodiments according to the first aspect of the invention can also be applied to the second aspect of the invention.

The plurality of devices comprised by the gripper may form fingers of the gripper. For example, the gripper comprises three, four or five fingers. In case of five fingers, the gripper essentially mimics a human hand.

The gripper can be based on a human hand. To this end, for example, a thumb of the gripper comprises the device according to the first aspect of the invention, allowing to realize a rotational movement of the thumb about its longitudinal axis, wherein the remaining four fingers each comprise three hinges configured to pivot three finger members towards a palm of the hand.

However, the gripper can also allow for functionalities that exceed the flexibility of a human hand. For example, fingers of the gripper can be bidirectional such that they can be moved both towards the palm and the back of the hand with equal dexterity.

Different finger kinematics can be achieved by changing the number, dimensions and/or shape of members forming the finger, as well as the hinges interconnecting the members, particularly by adjusting the curved guide surface of the first member as well as the surface of the second member, according to the intended application.

A third aspect of the invention relates to a robot, comprising at least one device for applying force to an object according to the first aspect of the invention and/or a gripper according to the second aspect of the invention. As such, the embodiments according to the first aspect and/or the second aspect of the invention can also be applied to the third aspect of the invention.

A fourth aspect of the invention relates to a method for handling at least one object. The method comprises providing a device for applying force to an object according to the first aspect of the invention, a gripper according to the second aspect of the invention and/or a robot according to the third aspect of the invention, and applying a force to an object with at least one device for applying force to an object to position and/or fix the object. As such, the embodiments according to the first aspect and/or the second aspect and/or the third aspect of the invention can also be applied to the fourth aspect of the invention.

Exemplary embodiments are described below in conjunction with the Figures. The Figures are appended to the claims and are accompanied by text explaining individual features of the shown embodiments and aspects of the present invention. Each individual feature shown in the Figures and/or mentioned in the text of the Figures may be incorporated (also in an isolated fashion) into a claim relating to the first aspect, the second aspect, the third aspect and/or the fourth aspect according to the present invention.
- Fig. 1: shows geometrical shapes for explanation of features of the device for applying force to an object according to the invention;
- Fig. 2: shows an embodiment of the device for applying force to an object according to the invention;
- Fig. 3: shows a finger comprising the device for applying force to an object according to the embodiment of Fig. 2;
- Fig. 4: shows an embodiment of a gripper according to the invention with a finger according to Fig. 3;
- Fig. 5: shows an embodiment of the device for applying force to an object in a cross-sectional view, wherein a first member is arranged with respect to a second member in a first position; and
- Fig. 6: shows the embodiment of Fig. 5, wherein the first member is arranged with respect to the second member in a second position.
- Fig. 7: shows an embodiment of a finger with a tensioning system for performing movements of the finger using with a first and a second pair of traction elements associated with a first and a second spool set and a first and a second motor;
- Fig. 8: shows the embodiment of the finger of Fig. 7 wherein a third pair of traction elements associated with a third spool set and a third motor is shown; and
- Fig. 9: shows the embodiment of the finger of Fig.7 and Fig. 8, wherein the first, the second and the third pair of traction elements of the tensioning system are shown together.

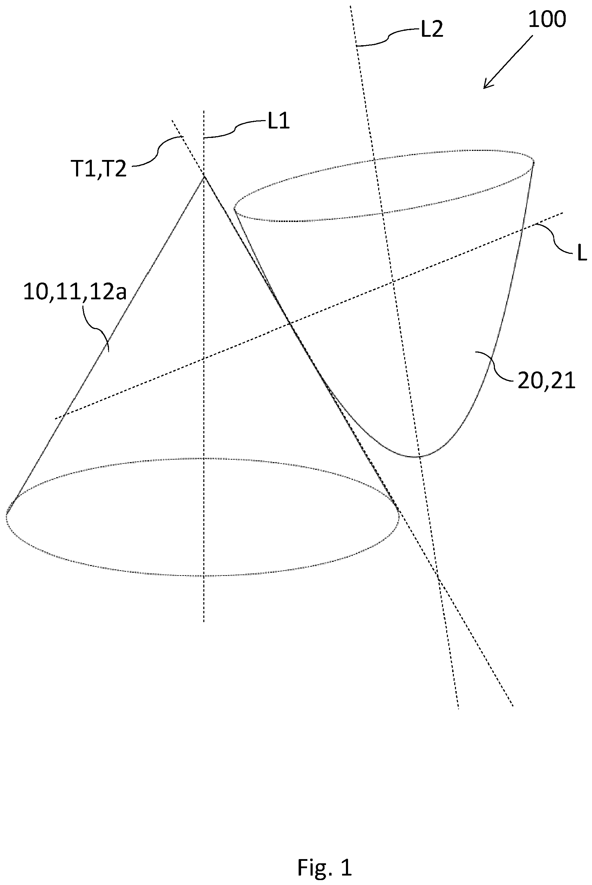

Fig. 1 shows geometrical shapes for explanation of features of the device 100 for applying force to an object according to the invention. According to the invention, the device 100 for applying force to an object comprises a first member 10 that has a curved guide surface 11 which is formed for guiding a second member 20 on this curved guide surface 11. The first member 10 comprises a longitudinal axis L1 that extends in the same plane as a tangent T1 on the guide surface 11 of the first member 10, the tangent T1 being at an acute angle to the longitudinal axis L1 and the curved guide surface 11 being curved at least about the longitudinal axis L1. In the present embodiment, the first member 10 forms a cone, such that the guide surface 11 of the first member 10 is a cone surface area 12a. According the present embodiment, the second member 20 comprises a longitudinal axis L2 that extends in the same plane as a tangent T2 on the surface 21 of the second member 20, the tangent T2 being at an acute angle to the longitudinal axis L2 and the surface being curved at least about the longitudinal axis L2. In the present embodiment, the second member 20 forms a paraboloid, such that the surface 21 of the second member is a paraboloid surface area.

As can further be seen in Fig. 1, the first member 10 and the second member 20 are in contact with each other along a longitudinal axis L of the device 100 for applying force to an object. The longitudinal axis L extends perpendicular to the two tangents T1,T2, which coincide as the first member 10 contacts the second member 20. As a consequence of the geometrical shapes of the first and the second member 10,20, the second member 20 can roll on the guide surface 11 of the first member 10 under a rotation of the second member 20 around the longitudinal axis L of the device 100, also referred to as "screw home torque motion", which substantially improves the positioning and/or fixation of object by means of the device 100.

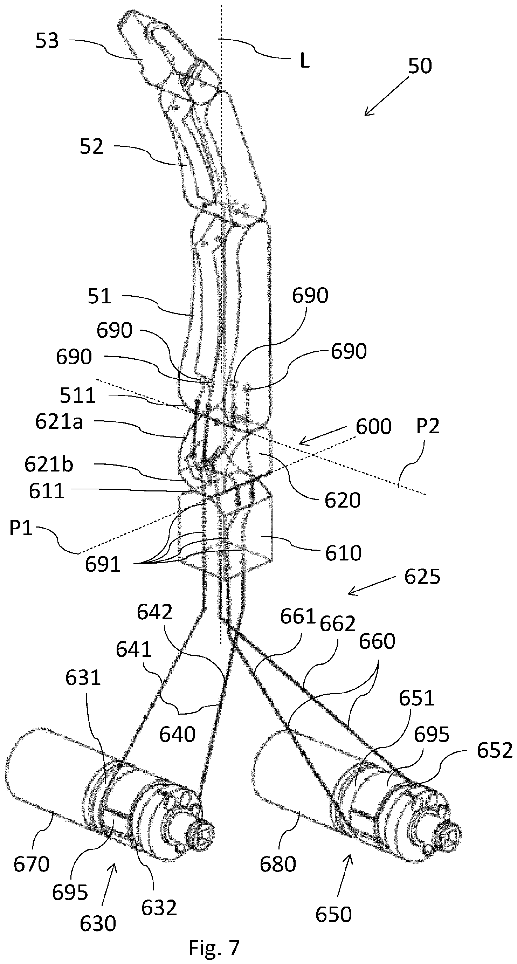

Movements between the first and the second member 10,20 can be achieved by external forces acting on the members 10,20. In particular, the first and the second member 10,20 can be moved with respect to each other by a tensioning system 625, for example according to the embodiment shown in Fig. 7, Fig. 8 and Fig. 9. In particular, the rotation of the second member 20 around the longitudinal axis L of the device 100 can occur simultaneously with the rolling movement of the second member 20 on the first member 10, such that no additional motor is needed to cause the advantageous rotation of the second member 20 around the longitudinal axis L of the device 100. The advantageous screw home torque motion thus does not require an additional motor, but is achieved entirely by the surface geometry of the first member 10 and the second member 20,

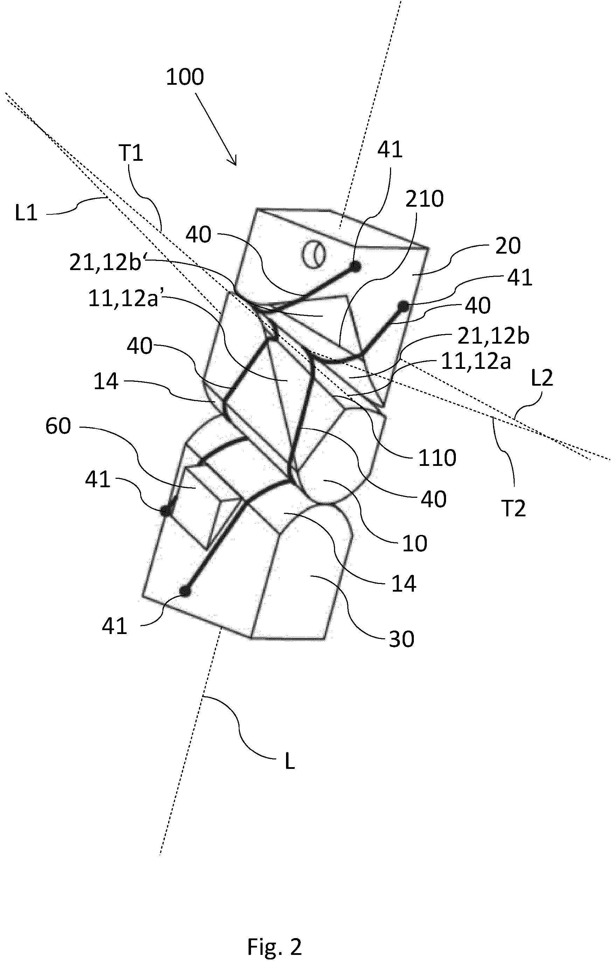

Fig. 2 shows an embodiment of the device 100 for applying force to an object according to the invention. The device 100 for applying force to an object comprises a first member 10 and a second member 20 arranged along a longitudinal axis L of the device 100. The first member 10 has a curved guide surface 11 formed for guiding the second member 20 on this curved guide surface 11. The second member 20 comprises a surface 21 with which it can roll on the curved guide surface 11 of the first member 10. As such, the first member 10 and the second member 20 are hingedly connected with each other.

The curved guide surface 11 of the first member 10 according to the present embodiment comprises a section forming a first cone surface area 12a and a section forming an adjacent second cone surface are 12a'. The surface 21 of the second member 20 comprises a section forming a first cone surface area 12b and an adjacent section forming a second cone surface area 12b'. In Fig. 2, the first member 10 is shown with the its first cone surface area 12a being in contact with the first cone surface area 12b of the surface 21 of the second member 20.

The first cone surface area 12a and the second cone surface area 12a' of the curved guide surface 11 of the first member 10 are delimited from each other by a boundary edge 110 of the first member 10. Similarly, the fist cone surface area 12b and the second cone surface area 12b' of the second member 20 are delimited from each other by a boundary edge of the second member 210. The curved guide surface 11 of the first member 10 and the surface 21 of the second member 20 are dimensioned such that the second member 20 can roll on the second member 10 with the first cone surface area 12a of the first member 10 being in contact with the first cone surface area 12b of the second member 12, until the boundary edge 110 of the first member 10 comes in contact with the boundary edge 210 of the second member 20. The second member 20 can roll beyond the boundary edge 110 of the first member 10, such that the second cone surface area 12b' of the second member 20 comes into contact with the second cone surface area 12a' of the first member 10. Depending on which sections of the curved guide surface 11 of the first member 10 and the surface 21 of the second member 20 are in contact with each other, the movement of the second member 20 with respect to the first member 10 is different as a consequence of the different geometrical shapes rolling on top of each other.

The cone surface area 12a of the first member 10 is part of an imaginary cone with a cone axis that coincides with a longitudinal axis L1 of the first member 10, as indicated in Fig. 2. The longitudinal axis L1 extends in the same plane as a tangent T1 of the cone surface area 12a. The tangent T1 is at an acute angle to the longitudinal axis L1 and the cone surface area 12a is additionally curved about the longitudinal axis L1 of the first member 10. In the same fashion, the first cone surface area 12b of the second member 20 is part of an imaginary cone with a cone axis that coincides with a longitudinal axis L2 of the second member 20, as indicated in Fig. 1. The longitudinal axis L2 extends in the same plane as a tangent T2 of the first cone surface area 12b. The tangent T2 is at an acute angle to the longitudinal axis L2 and the first cone surface area 12b is additionally curved about the longitudinal axis L2 of the second member 20. Other than for example cylindrical shapes, this shape of the curved guide surface 11 of the first member 10 and the surface 21 of the second member 20 allow for complex rolling movements of the second member 20 on the guide surface 11 of the first member 10. In particular, the second member 20 can roll and thus pivot with respect to the first member 10 in planes comprising the longitudinal axis L under a simultaneous rotation around a longitudinal axis L of the device indicated in Fig. 1, which is also referred to as "screw home torque motion" herein. In other words, the second member 20 may perform a precession with respect to the longitudinal axis L. As such, the device 100 for applying force to an object allows for multiple rotational degrees of freedom of the second member 20 with respect to the first member 10, which corresponds to the ability of the human thumb to perform abduction and flexion movements under a rotation of thumb members around a longitudinal axis of the thumb". Consequently, the positioning and/or fixation of objects by means of the device 100 for applying force to an object is significantly improved.

As can further be seen in Fig. 2, the device 100 for applying force to an object according to the present embodiment comprises a third member 30. The third member 30 comprises a cylindrical surface 14 which is in contact with a cylindrical surface 14 of the first member 10, such that the third member 30 and the first member can roll on each other via their cylindrical surfaces 14. Consequently, the first member 10 and the third member 30 form a hinge configured for a pivotal movement between the first member 10 and the third member 30 around an axis that extends parallel to cylinder axes that define the cylindrical surfaces 14, which adds a further degree of freedom of motion to the device 100 for applying force to an object. The third member 30 further comprises a protrusion 60 forming a mechanical stop which limits the pivotal movement between the first member 10 and the third member 30.

Fig. 2 also shows a plurality guide tension elements 40 that crosswise interconnect the first member 10 with the second member 20 as well as the first member 10 with the third member 30. The guide tension elements 40 are fastened to the second member 20 and the third member 30 by attachment points 41 and, as such, keep the members 10,20,30 in mechanical contact with each other. The fastening can be realized for instance with an adhesive connection. The guide tension elements 40 can be fastened only to the first member 10 and the second member 20. Alternatively, the guide tension elements 40 can be additionally fastened to the first member 10, for example by means of adhesive. In particular, the guide tension elements 40 can be flexible, such that the members 10,20,30 can be moved with respect to each other, while staying in mechanical contact.

For example, the members 10,20,30 can be moved with respect to each other by means of a tensioning system 625 as disclosed in Fig. 7, Fig. 8 and Fig. 9.

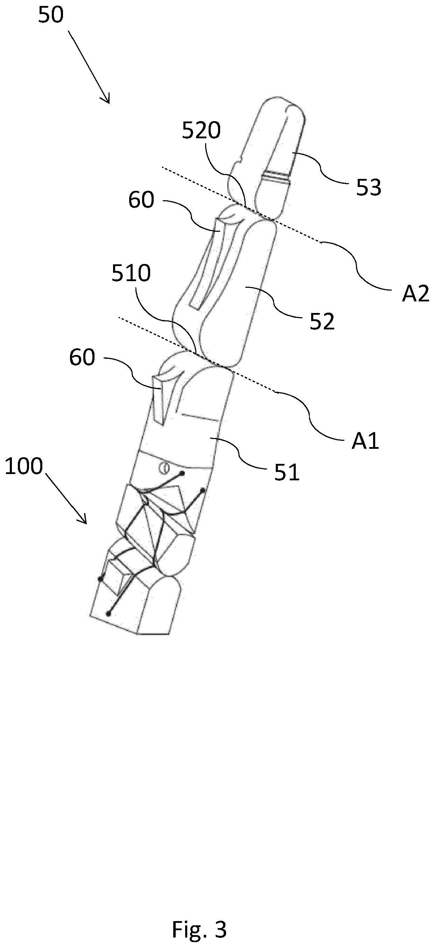

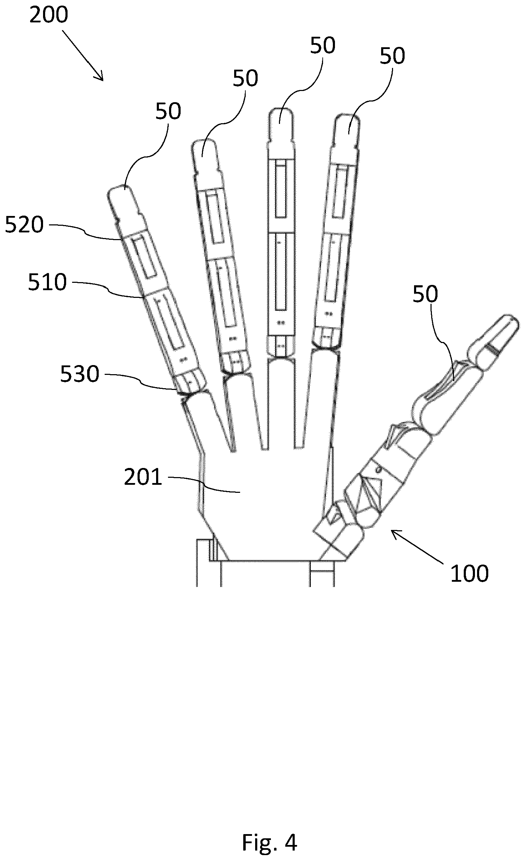

Fig. 3 shows an embodiment of a finger 50 comprising the device 100 for applying force to an object according to the embodiment of Fig. 2. With its ability to perform said "screw home torque motion", the device 100 for applying force to an object of the finger 50 acts similarly to the carpometacarpal hinge of a human finger, which substantially improves the positioning and/or fixation of objects by means of the finger 50, particularly a gripper 200 comprising such a finger 50, as will be further shown in Fig. 4.

The device 100 for applying force to an object of the finger 50 depicted in Fig. 3 is mechanically connected to a first finger member 51. The first finger member 51 is pivotably connected to a second finger member 52 by means of a first hinge 510, which allows for a pivotal motion of the first finger member 51 with respect to the second finger member 52 around a first axis A1, as indicated in Fig. 2. As such, the finger 50 comprises a further hinge with one rotational degree of freedom forming a plane of movement in which the second finger member 52 is pivotably connected to the first finger member 51 by means of the first hinge 510. The second finger member 52 is pivotably connected to a third finger member 53 by means of a second hinge 520, which allows for a pivotal motion of the second finger member 52 with respect to the third finger member 53 around a second axis A2. The finger 50 thus comprises a further hinge with one rotational degree of freedom forming a plane of movement in which the third finger member 53 is pivotably connected to the second finger member 52 by means of the second hinge 520. As such, the finger 50 according to the present embodiment comprises similar components like a human finger which the first finger member 51 corresponding to the os metacarpi, the second finger member 52 corresponding to the phalanx proximalis and the third finger member 53 corresponding to the phalanx distalis. The serial arrangement of the hinges comprised by the device 100 for applying force to an object, the first hinge 510 and the second hinge 520 allow for movements with multiple degrees of freedom, which improves the positioning and/or fixation of objects by means of the finger 50.

Protrusions 60 forming mechanical stops are arranged at the first finger member 51 and the second finger member 52 to limit the respective pivotal movements between the first finger member 51 and the second finger member 52 as well as the second finger member 52 and the third finger member 53.

Fig. 4 shows an embodiment of a gripper 200 according to the invention. The gripper 200 comprises five fingers 50, wherein the finger 50 comprising a device 100 for applying force to an object shown on the right side of the drawing plane in Fig. 4 corresponds to the finger 50 shown in Fig. 3. As such, the finger 50 with the device 100 for applying force to an object can form a thumb of the gripper, wherein the device 100 for applying force to an object allows to perform abduction and flexion movements under a rotation of thumb members around a longitudinal axis of the thumb, also referred to as "screw home torque motion". The device 100 for applying force to an object acts as a hinge with multiple rotational degrees of freedom between the finger 50 forming the thumb to and the palm 201 of the gripper 200.

The remaining four fingers 50 each comprise a first hinge 510 and a second hinge 520, as explained for the finger 50 representing the thumb, cf. Fig. 3. However, other than the thumb, the remaining four fingers 50 are each mechanically connected to the palm 201 of the gripper 200 by means of a third hinge 530, which, as the first hinge 510 and the second hinge 520, allows for a pivotal movement of the respective finger 50 with one degree of freedom, similar to the index finger, middle finger, ring finger and little finger of a human hand. The first hinge 510, the second hinge 520 and the third hinge 530 allow for pivotal movements of members of the finger 50 towards and away from the palm 201 of the gripper 200. As such, the gripper 200 according to the present embodiment allows for complex movements of the fingers 50 with various degrees of freedom, wherein the device 100 for applying force to an object substantially improves the ability of the gripper 200 to position and/or fixate objects.

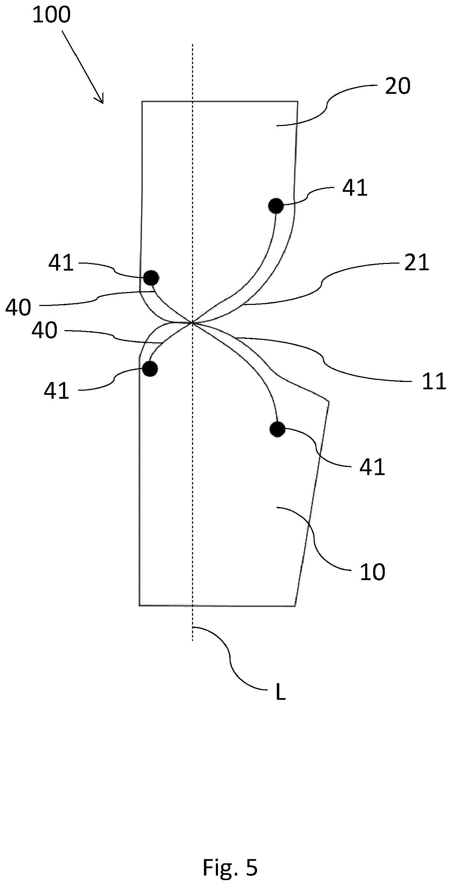

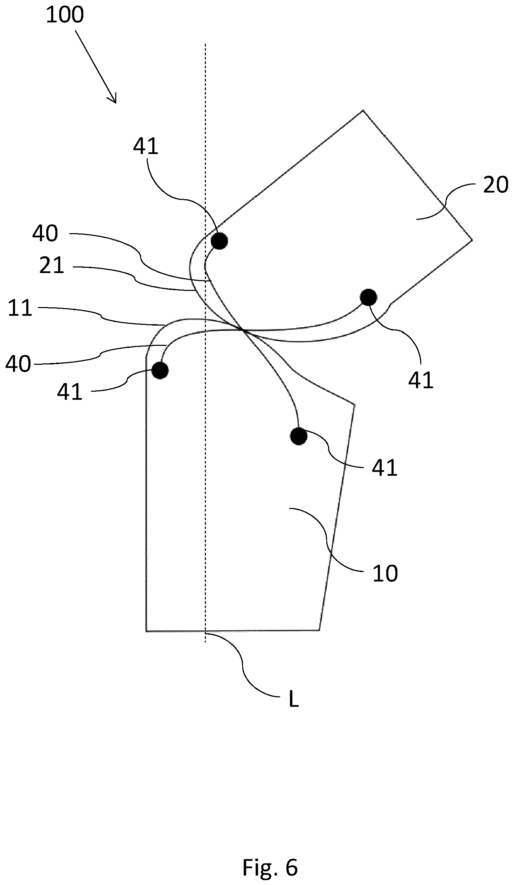

Fig. 5 shows an embodiment of the device 100 for applying force to an object in a cross-sectional view. The device 100 according to the present embodiment comprises a first member 10 and a second member 20. The first member 10 and the second member 20 are in contact with each other by means of a curved guide surface 11 of the first member 10 and a surface 21 of the second member 20. With its surface 21, the second member 20 can roll on the curved guide surface 11 of the first member 10. In Fig. 5, the first member 10 and the second member 20 are shown in a first position. Fig. 6 shows the first member 10 and the second member 20 in a second position.

As best seen in the cross-sectional views of Fig. 5 and Fig. 6, guide tension elements 40 crosswise interconnect the first member 10 and the second member 20. One end of each tension element 40 is fastened to the first member 10, the other end of each tension element 40 is fastened to the second member 20. The fastening is realized at attachment points 41 of the first member 10 and the second member 20.

The guide tension elements 40 cross each other on the curved guide surface 11 of the first member 10 and the surface 21 of the second member 20 in their line of contact and thus on an axis that is parallel to an axis of rotation defining a hinge between the first and the second member 10,20. The guide tension elements 40 advantageously allow for guiding the rolling movement of the second member 20 with its surface 21 on the curved guide surface 11 of the first member 10. For example, the guide tension elements 40 comprise threads, bands, ligaments and the like.

Fig. 6 shows the embodiment of the device 100 for applying force to an object from Fig. 5, wherein the first member 10 and the second member 20 are shown in a second position with respect to each other. This second position can be reached as the second member 20 rolls with its surface 21 on the curved guide surface 11 on the first member 10 from the first position shown in Fig. 4 to the second position shown in Fig. 5.

Fig. 7 shows an embodiment of a finger 50. The finger 50 comprises a lower member 610, an intermediate member 620 and for contacting the object a first finger member 51, a second finger member 52 and a third finger member 53.

As can be seen in Fig. 7, the first finger member 51 comprises a guide surface 511 facing a first guide surface 621a of the intermediate member 620 and the lower member 610 comprises a guide surface 611 facing a second guide surface 621b of the intermediate member 620. The guide surface 611 of the lower member 610 and the second guide surface 621b of the intermediate member 620 are curved around a first pivot axis P1, as indicated in Fig. 7. The guide surface 511 of the first finger member 51 and the first guide surface 621a of the intermediate member 620 are curved around a second pivot axis P2 that extends perpendicular to the first pivot axis P1. According to the present embodiment, the guide surfaces 511,611,621a,621b are each cylindrical. As such, the mechanical connections between the members 51,620,610 via their respective guide surfaces realize hinges of a hinge unit 600, which allow for a pivoting of the finger 50, particularly its finger members 51,52,53 around the first pivot axis P1 and the second pivot axis P2. As a consequence of the curved cylindrical shapes of the guide surfaces 511,611,621a,621b, the pivoting of the finger 50 is realized by a relative rolling movement between the intermediate member 620 and the first finger member 51 via their respective guide surfaces 511,621a and/or by a relative rolling movement between the intermediate member 620 and the lower member 610 via their respective guide surfaces 611,621b. The hinge unit 600 realizes two degrees of rotational freedom of the finger 50 in two theoretical movement planes that are perpendicular to each other and to a longitudinal axis L of the finger 50 indicated in Fig. 7.

Besides via the hinge unit 600, the lower member 610 is hingedly connected to the first finger member 51 via a tensioning system 625 comprising two pairs of traction elements 640,660 fixed to the first finger member 51. A first pair of traction elements 640 is mounted to a first spool set 630 and a second pair of traction elements 660 is mounted to a second spool set 650. A first traction element 641 of the first pair of traction elements 640 is mounted to a first spool 631 of the first spool set 630, and the second traction element 642 of the first pair of traction elements 640 is mounted to a second spool 632 of the first spool set 630. Similarly, the first traction element 661 of the second pair of traction elements 660 is mounted to a first spool 651 of the second spool set 650 and the second traction element 662 of the second pair of traction elements 660 is mounted to a second spool 652 of the second spool set 650. As can be seen in Fig. 7, the traction elements 641,642,661,662 extend via respective conduits 690 through the lower member 610, the intermediate member 620 into the first finger member 51, where each traction element 641,642,661,662 is fixed a respective fixing point 690.

Moreover, the finger 50 comprises a first motor 670 for driving the first spool set 630 and a second motor 680 for driving a second spool set 650. By driving the spool sets 630,650, the respective traction elements 641,642,661,662 can be wound or unwound from the respective spool 631,631,651,652, whereby the length between the respective spool 631,631,651,652 and the fixing point 690 of the respective traction element 641 ,642,661,662 is varied, such that a pivoting of the finger 50 can be realized. The respective motor 670,680 is configured such that if the respective first traction element 641,661 of the respective pair of traction elements 640,660 is wound up the respective first spool 631,651, thereby shortening the length of the respective first traction element 641,661, the respective second traction element 642,662 of the respective pair of traction elements 640,660 is unwound from the respective second spool 632,652 in an antagonistic fashion, thereby increasing the length of the respective second traction element 642,662 by the same amount, and vice versa. As such, a pivoting of the finger 50 around the first pivot axis P1 and the P2 can be achieved. The spools of each spool set 630,650 are mechanically coupled to each other by a respective torsion spring 695, which prevents a sagging of the traction elements 641,642,661,662 by keeping the unwound traction element taught with respect to the wound traction element. Additionally, the torsion springs 695 can realize a selective bi-directional compliance of the finger 50, wherein if the respective motor 670,680 is stopped, the finger 50 cannot be pivoted in one direction around the respective pivot axis P1,P2, thereby realizing a strong grasp of the finger 50, but can be pivoted in the other direction around the respective pivot axis P1,P2 under external forces counteracting the elastic element, such that the finger 50 can yield in the event of an external force acting on the finger 50.

As can further be seen in Fig. 7 from following the traction elements 641,642,661,662 through their conduits 691 to their fixing points 690 at the first finger member 51, the pairs of traction elements 640,660 are arranged diagonally with respect to the movement planes associated with the first pivot axis P1 and the second pivot axis P2. Consequently, if a pair of traction elements 640,660 is driven by the respective motor 670,680, the finger 50 pivots not only around the respective pivot axis P1,P2, but at the same time around the longitudinal axis L of the finger 50, thereby realizing the screw home torque motion of the finger 50, which substantially improves the positioning and/or fixation of objects by means of the finger 50.

The guide surface 611 of the lower member 610; the first guide surface 621a and/or the second guide surface 621b of the intermediate member 620; and/or the guide surface 511 of the first finger member 51 can be formed as the curved guide surface 11 according to the first aspect of the invention. In particular, the first guide surface 621a of the intermediate member 620 can be formed as the curved guide surface 11 according to the first aspect of the invention, such that the finger 50 realizes a device 100 according to the first aspect of the invention. As such, the screw home torque motion can be realized by the diagonal arrangement of the pairs of traction elements 640,660 with respect to the movement planes associated with the first and/or the second pivot axis P1,P2 and/or by the curved guide surface 11 of a member.

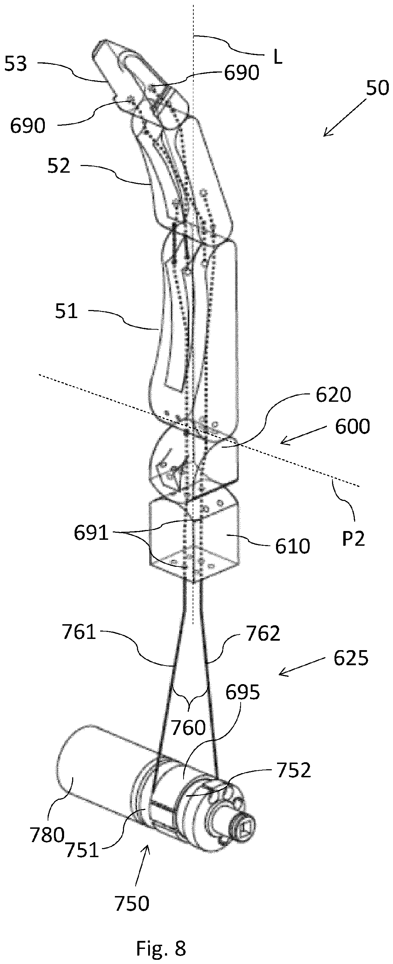

Fig. 8 shows the embodiment of the finger 50 as according to Fig. 7, wherein the tensioning system 625 does not show the first and second pair of traction elements 640,660 with their associated first and second spool sets 630,650, but instead depicts a third pair of traction elements 760 with a third spool set 750 associated with the third pair of traction elements 760. A first traction element 761 and a second traction element 762 of the third pair of traction elements 760 extend via conduits through the lower member 610, the intermediate member 620, the first finger member 51, the second finger member 52 into the third finger member 53, where each traction element 761,762 of the third pair of traction elements 760 is fixed at a respective fixing point 690. A third motor 780 is configured to drive a first spool 751 and a second spool 752 of the second spool set 750 in an antagonistic fashion, as explained for the first and the second spool set 630,650 of Fig. 7.

Other than the respective traction elements 641,642,661,662 of the first and the second pair of traction elements 640,660 of Fig. 7, a first traction element 761 and a second traction element 762 of the third pair of traction elements 760 are not arranged diagonally with respect to the second pivot axis P2 indicated in Fig. 3, but extend perpendicular to the second pivot axis P2. Consequently, if the first and the second traction elements 761,762 are driven by the third motor 780 in an antagonistic fashion, the finger 50, particularly the first finger member 51, the second finger member 52 and the third finger member 53, pivots around the second pivot axis P2, and not, as in Fig. 7, additionally around the longitudinal axis L. Besides a pivoting around the second pivot axis P2, hinges between the first finger member 51 and the second finger member 52 as well as between the second finger member 52 and the third finger member 53 additionally allow for a pivotal movement between the adjacent finger members 51,52,53 around two further pivot axes that extend parallel to the second pivot axis P2. As such, the third pair of traction elements 760 with the associated third spool set 750 and the third motor 780 allows for a pivoting of the finger members 51,52,53 around three parallel pivot axes, similar to a human finger. At the same time, the first and the second pair of traction elements 640,660 with their associated spool sets 630,650 and motors 670,680 allows for a pivoting of the finger 50, particularly the first finger member 51, the second finger member 52 and the third finger member 53 around the first and the second pivot axis P1, P2 under simultaneous rotation of the finger 50 around the longitudinal axis L, realizing a screw home torque motion.

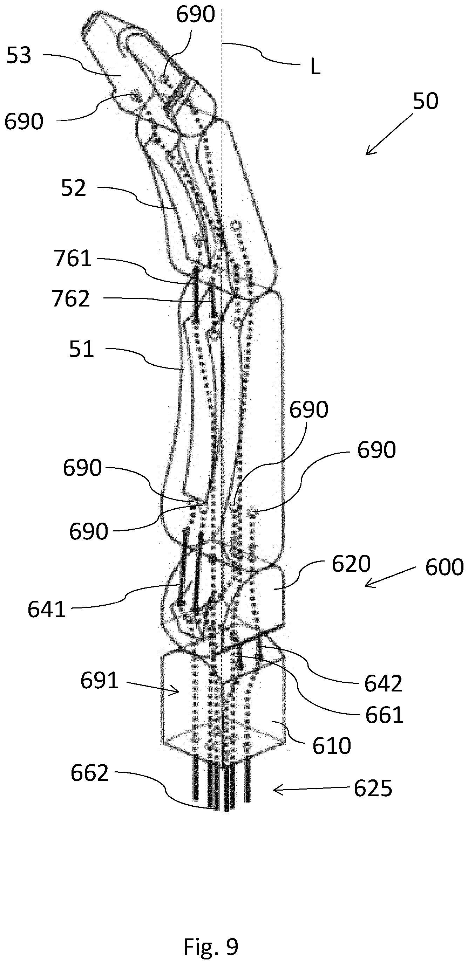

Fig. 9 highlights the finger 50 of Fig. 7 and Fig. 8 with the combined tensioning system 625 of Fig. 7 and Fig. 8 with the first pair of traction elements 640, the second pair of traction elements 660 and the third pair of traction elements 760 and their corresponding traction elements 641,642,661,662,761,762 extending through the finger 50 to their respective fixing point 690.

**List of reference signs**

| | |
|---|---|
| First member | 10 |
| Curved guide surface | 11 |
| Cone surface area | 12 |
| First cone surface area of the curved guide surface | 12a |
| Second cone surface area of the curved guide surface | 12a' |
| First cone surface area of the surface | 12b |
| Second cone surface area of the surface | 12b' |
| Cylindrical surface | 14 |
| Second member | 20 |
| Surface | 21 |
| Third member | 30 |
| Guide tension elements | 40 |
| Attachment point | 41 |
| Finger | 50 |
| First finger member | 51 |
| Second finger member | 52 |
| Third finger member | 53 |
| Protrusion | 60 |
| Device | 100 |
| Boundary edge of the first member | 110 |
| Gripper | 200 |
| Palm | 201 |
| Boundary edge of the second member | 210 |
| First hinge | 510 |
| Guide surface of the first finger member | 511 |
| Second hinge | 520 |
| Third hinge | 530 |
| Hinge unit | 600 |
| Lower member | 610 |
| Guide surface of the lower member | 611 |
| Intermediate member | 620 |
| First guide surface of the intermediate member | 621a |
| Second guide surface of the intermediate member | 621b |
| Tensioning system | 625 |
| First spool set | 630 |
| First spool of first spool set | 631 |
| Second spool of first spool set | 632 |
| First pair of traction elements | 640 |
| First traction element of first pair of traction elements | 641 |
| Second traction element of first pair of traction elements | 642 |
| Second spool set | 650 |
| First spool of second spool set | 651 |
| Second spool of second spool set | 652 |
| Second pair of traction elements | 660 |
| First traction element of second pair of traction elements | 661 |
| Second traction element of second pair of traction elements | 662 |
| First motor | 670 |
| Second motor | 680 |
| Fixing point | 690 |
| Conduit | 691 |
| Torsion spring | 695 |
| Third spool set | 750 |
| First spool of third spool set | 751 |
| Second spool of third spool set | 752 |
| Third pair of traction elements | 760 |
| First traction element of third pair of traction elements | 761 |
| Second traction element of third pair of traction elements | 762 |
| Third motor | 780 |
| First axis | A1 |
| Second axis | A2 |
| Longitudinal axis of the device | L |
| Longitudinal axis of first member | L1 |
| Longitudinal axis of second member | L2 |
| First pivot axis | P1 |
| Second pivot axis | P2 |
| Tangent of the curved guide surface | T1 |
| Tangent of the surface | T2 |

## Claims

1. A device (100) for applying force to an object for positioning and/or fixation of the object, comprising a first member (10) and a second member (20) hingedly connected to the first member (10), wherein the first member (10) has a curved guide surface (11) for forming a hinge connecting the members (10, 20), which curved guide surface (11) is formed for guiding the second member (20) on this curved guide surface (11), wherein the first member (10) comprises a longitudinal axis (L1) that extends in the same plane as a tangent (T1) on the guide surface (11) of the first member (10), the tangent (T1) being at an acute angle to the longitudinal axis (L1) and the curved guide surface (11) being curved at least about the longitudinal axis (L1), and wherein the second member (20) comprises a surface (21) with which this second member (20) can roll on the guide surface (11) of the first member (10).

2. The device (100) for applying force to an object according to claim 1, wherein the second member (20) comprises a longitudinal axis (L2) that extends in the same plane as a tangent (T2) on the surface (21) of the second member (20), the tangent (T2) being at an acute angle to the longitudinal axis (L2) and the surface (21) being curved at least about the longitudinal axis (L2).

3. The device (100) for applying force to an object according to claim 1 or 2, wherein the guide surface (11) of the first member (10) and/or the surface (21) of the second member (20) is formed at least in regions by a cone surface area (12), an ellipsoid surface area and/or a paraboloid surface area.

4. The device (100) for applying force to an object according to claim 3, wherein at least one cone surface area (12) is a cone surface area (12) of a cone comprising an elliptical base and/or wherein at least one paraboloid surface area is a paraboloid surface area of a paraboloid comprising an elliptical base.

5. The device (100) for applying force to an object according to one of the claims 3 or 4, wherein at least one cone surface area (12) is a cone surface area (12) of an inclined cone and/or the at least one paraboloid surface area is a paraboloid surface area of an inclined paraboloid.

6. The device (100) for applying force to an object according to one of the claims 3 to 5, wherein the guide surface (11) of the first member (10) has an additional cone surface area (12a') adjacent to a cone surface area (12a), an ellipsoid surface area and/or a paraboloid surface area of the first member (10).

7. The device (100) for applying force to an object according to one of the preceding claims, wherein two pairs of traction elements (640,660) are connected to one of the two members (10,20) at respective fixing points (690), wherein the respective fixing points (690) of a respective pair of traction elements (640,660) are arranged in a plane which is substantially perpendicular to the respective other plane, so that a rotational movement of the member (10,20) provided with the pairs of traction elements (640,660) can be realized by antagonistic movement of the traction elements (641,642,661,662) of said pair of traction elements (640,660).

8. The device (100) for applying force to an object according to one of the preceding claims, wherein a plurality of hinges is arranged in series, at least one of the hinges being formed according to at least one of the claims 1 to 7.

9. The device (100) for applying force to an object according to claim 8, wherein at least one further hinge (510,520,530) is provided with only one rotational degree of freedom, said further hinge (510,520,530) with one rotational degree of freedom allows movement of a movable member pivotally connected to another member by means of said further hinge (510,520,530) pivotable in just one plane parallel to the longitudinal axis of said movable member.

10. The device (100) for applying force to an object according to claim 9, wherein the hinge (510,520,530) realizing one rotational degree of freedom has, on the two members coupled to one another by the hinge (510,520,530), respective curved surfaces which run perpendicularly to the plane of movement.

11. The device (100) for applying force to an object according to one of the preceding claims, wherein guide tension elements (40) crosswise interconnect the members which are coupled to each other by means of a hinge.

12. The device (100) for applying force to an object according to one of the preceding claims, wherein the device (100) for applying force to an object comprises at least one pivot for pivotally connecting members about the longitudinal axis of a member connected to the pivot and comprises a torque spring connecting the two members connected by means of the pivot.

13. A gripper (200), comprising at least one device (100) for applying force to an object according to one of claims 1 to 12.

14. A robot, comprising at least one device (100) for applying force to an object according to any one of claims 1 to 12 and/or a gripper (200) according to claim 13.

15. A method for handling at least one object, the method comprising providing a device (100) for applying force to an object according to one of claims 1 to 12, a gripper (200) according to claim 13 and/or a robot according to claim 14, and applying a force to an object with at least one device (100) for applying force to an object to position and/or fix the object.
